# EUROPEAN PATENT SPECIFICATION

(11) **EP 4 099 424 B1**
(45) Date of publication and mention of the grant of the patent: **27.05.2026**
(21) Application number: 21886810.7
(22) Date of filing: 27.10.2021
(51) Int. Cl.: H01M 4/04, G01B 5/06, G01B 3/20, H01M 10/42, H01M 4/02, H01M 10/0525, H01M 4/134, H01M 4/139, H01M 4/1395, H01M 4/13, H01M 10/052, H01M 10/058, G01B 21/08

(54) **METHOD OF MANAGING SLIDING REGION OF ELECTRODE**
VERFAHREN ZUR VERWALTUNG EINES ELEKTRODENSCHIEBEBEREICHS
PROCÉDÉ DE GESTION D'UNE RÉGION DE COULISSEMENT D'ÉLECTRODE

(30) Priority: 30.10.2020 KR 20200142659
(43) Date of publication of application: 07.12.2022
(73) Proprietor: LG Energy Solution, Ltd., Seoul 07335 (KR)
(72) Inventor: YANG, Seung Gi, Daejeon 34122 (KR); LEE, Ung Ju, Daejeon 34122 (KR)
(74) Representative: Plasseraud IP
(86) International application number: PCT/KR2021/015240
(87) International publication number: WO 2022/092816

(56) References cited:
- CN-A- 111 008 478
- CN-A- 111 682 255
- JP-A- 2012 160 301
- KR-A- 20060 010 656
- KR-A- 20150 031 257
- KR-B1- 101 562 571
- US-A1- 2008 199 775
- US-A1- 2017 256 822

## Description

### [Technical Field]

This application claims the benefit of priority based on Korean Patent Application No. 10-2020-0142659.

The present invention relates to a method of managing a sliding region of an electrode, and more particularly, to a method of managing a sliding region of an electrode for preventing a reversal phenomenon an NP-ratio by managing the loading amount and thickness of an electrode mixture layer according to a local position where a positive electrode and a negative electrode face.

### [Background Art]

As technologies about mobile, automotive and energy storage devices are developed and their demands increase, the demand of batteries as an energy source has also increased rapidly. As such, many studies have been done for lithium secondary batteries having a high energy density and discharge voltage, and such lithium secondary batteries have been widely used.

The secondary battery is classified into a cylindrical battery and a prismatic battery in which an electrode assembly is embedded in a cylindrical or prismatic metal according to the shape of the battery case, and a pouch-shaped battery in which an electrode assembly is embedded in a pouch-shaped case of an aluminum laminate sheet.

Further, the electrode assembly embedded in the battery case is a power generating element capable of charging/discharging composed of a laminated structure of a positive electrode/separator/negative electrode. Representative examples thereof include a jelly-roll type electrode assembly in which long sheet type positive electrodes and negative electrodes are wound with a separator interposed therebetween, a stacked electrode assembly in which a plurality of positive and negative electrodes cut in a predetermined size unit are sequentially stacked with a separator interposed therebetween, and a stacked/foldable electrode assembly in which bi-cells or full cells, in which positive and negative electrodes of a predetermined unit are stacked with a separator interposed therebetween, are wound.

A positive electrode and a negative electrode, which constitute an electrode assembly, are manufactured by coating an electrode slurry, which is prepared in a mixing process, on an electrode current collector in a predetermined pattern and with a constant thickness through a slot die, and then drying the electrode slurry. However, since the electrode slurry is a fluid, it flows down after being coated, and such a flowing down of the electrode slurry is called sliding. Such a sliding may frequency occur at both ends in the width direction of the coated part on which an electrode active material has been coated. Likewise, a portion, where the thickness of the slurry coating layer gradually changes to thereby form a slant part, is called a sliding region.

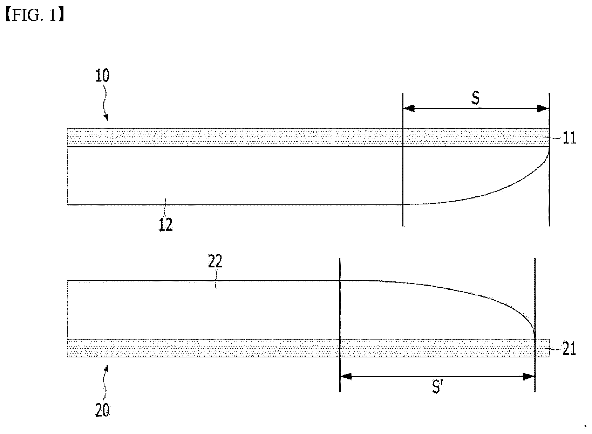

The sliding region is shown within 30 mm or 20 mm from the boundary line of the non-coated part toward the coated part. As shown in FIG. 1, the length of the sliding region of the negative electrode may be different from that of the positive electrode, and the shape of the sliding region may be a straight line or a curve. Further, the slopes of the sliding regions of the positive electrode and the negative electrode may be different. As such, there may be a portion where there is an imbalance in the NP-ratio, depending on the position where the positive electrode and the negative electrode face, and the imbalance of the NP-ratio may cause a safety accident such as a short circuit by lithium precipitation in the negative electrode. For this reason, there is a need for a method for managing the NP-ratio in the sliding region of an electrode, but there has been no standardized method for determining or measuring the sliding of an electrode. Therefore, there is a need for such a technology.

KR 101 562 571 B1 discloses a device for controlling coating-quantity of electrodes. US 2017/256822 A1 discloses a wound electrode body having active electrode material of different widths. US 2008/199775 A1 discloses a manufacturing and examination method for forming a negative electrode within a battery.

### [Disclosure]

### [Technical Problem]

The present invention is believed to solve at least some of the above problems. For example, an aspect of the present invention provides a method of managing a sliding region of an electrode for preventing the NP-ratio reversal in a sliding region of an electrode.

### [Technical Solution]

A method of managing a sliding region of an electrode for solving the problems is laid out in appended claim 1.

The method of managing a sliding region of an electrode further includes (e) a process of calculating a ratio (NP-ratio) of a capacity per unit area of the negative electrode to a capacity per unit area of the positive electrode at the measurement location.

**In an embodiment** of the present invention, the process (e) includes: (e-1) a process of accumulating correlation data of a loading amount of the positive electrode and the negative electrode, a ratio of thickness of each of the positive electrode and the negative electrode, and the NP-ratio, by repeating the processes (a) -(d) while changing the measurement location for the positive electrode and the negative electrode for a specimen; (e-2) a process of deriving a correlation equation by analyzing the accumulated data; and (e-3) a process of calculating the NP-ratio by substituting the loading amount measured in the process (b) and the ratio ofthe thickness calculated in the process (d) into the correlation equation for the positive electrode and the negative electrode, which are subjects of management.

At this time, the method may further include a process of further setting a plurality of measurement locations at regular intervals along a longitudinal direction (y axis) of the electrode, at each point of the measurement locations (X₁, X_{2...}Xₙ).

In another embodiment of the present invention, the process (a) includes: (a-1) a process of making an image for a plurality of vertical lines at regular intervals along a width direction (x-axis) of the electrode at the specific region; (a-2) a process of making an image for a plurality of horizontal lines at regular intervals along a longitudinal direction (y-axis) in the set sliding region; (a-3) a process of setting a plurality of rectangular regions formed by intersection of the vertical lines and the horizontal lines as segmented regions; and (a-4) setting respective arbitrary points within the set segmented regions as measurement locations. At this time, each interval of the plurality of vertical lines of the process (a-1) and each interval of the plurality of horizontal lines of the process (a-2) is in the range of 0.05 to 0.2 mm.

**In** an embodiment of the present invention, the process (b) and the process (c) may include measuring a thickness of the electrode mixture layer by using rotary calipers.

In an embodiment of the present invention, the process (b) may include measuring the loading amount of the electrode mixture layer by using a web gauge.

In an embodiment of the present invention, the positive electrode and the negative electrode of the process (b) are an electrode which is obtained by applying an electrode slurry containing an electrode active material on a current collector and then drying the electrode slurry.

In an embodiment of the present invention, the positive electrode and the negative electrode of the process (b) is an electrode before going through a rolling process.

### [Advantageous Effects]

The present invention provides a method of easily managing an NP-ratio through the measurement of the thickness and loading amount of the electrode mixture layer in a positive electrode and a negative electrode including a sliding region of an electrode.

### [Brief Description of the Drawings]

FIG. 1 is a diagram illustrating a difference between the length of the sliding region of a positive electrode and the length of the sliding region of a negative electrode.
FIG. 2 is a flowchart of a method of managing a sliding region of an electrode according to one embodiment of the present invention.
FIG. 3 is a flowchart of a method of managing a sliding region of an electrode according to another embodiment of the present invention.
FIG. 4 is a plan view and a cross-sectional view showing a sliding region of an electrode.
FIG. 5 is a schematic diagram showing a part of the process of measuring the thickness of an electrode mixture layer.
FIGS. 6 to 8 are schematic diagrams illustrating a process of setting a measurement location according to various embodiments of the present invention.

### [Detailed Description of the Preferred Embodiments]

Hereinafter, the present invention will be described in detail with reference to the drawings. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

**In** the present invention, the NP-ratio is defined as a value obtained by dividing the total capacity of the negative electrode by the total capacity of the positive electrode.

**In** the present invention, the sliding region refers to a region where the thickness of the electrode mixture layer gradually decreases toward a non-coated part in a region around the boundary between the non-coated part on which the electrode mixture layer (positive electrode mixture layer and negative electrode mixture layer) has not been applied, and the coated part on which the electrode mixture layer has been applied. Namely, the sliding region should be understood as a portion where the flatness of the electrode mixture layer decreases and its neighboring portion in a region around the boundary between of the coated part and the non-coated part.

Hereinafter, the present invention will be described in detail with reference to the drawings.

Conventionally, the NP-ratio of the electrode has been managed through the thickness and the loading amount in the central portion of the electrode. Such a management method may be used in a flat portion where the thickness of each of the positive electrode mixture layer and the negative electrode mixture layer is constant. However, in the case that the length of each sliding region of the positive electrode and the negative electrode, where a sliding has occurred, is different, and the decrease rate of the thickness of the positive electrode mixture layer in each sliding region of the positive electrode and the negative electrode is different from the decrease rate of the thickness of the negative electrode mixture layer in each sliding region of the positive electrode and the negative electrode, it is difficult to determine whether there has been a reversal of the NP-ratio by using a conventional management method.

FIG. 1 is a diagram illustrating a difference between the length of the sliding region of a positive electrode and the length of the sliding region of a negative electrode. Referring to FIG. 1, a positive electrode mixture layer 12 of a positive electrode 10 faces a negative electrode mixture layer 22 of a negative electrode 20, and the positive electrode mixture layer 12 and the negative electrode mixture layer 22 each has a sliding region (S or S') where the thickness gradually decreases in a direction extended toward the non-coated part at the end portion. As described above, since the electrode slurry is a fluid, such a sliding region is frequently generated in the boundary region between the coated part and the non-coated part due to the flowing property of the electrode slurry.

Generally, when the NP-ratio is equal to or greater than 1, lithium is not precipitated during charge/discharge, and particularly, the battery is not rapidly deteriorated during high rate charge/discharge. Hence, when designing an electrode assembly, it is designed to allow the NP-ratio to be equal to or greater than 1. In the case that the positive electrode and the negative electrode include a sliding region, a reversal phenomenon of the NP-ratio, in which the NP-ratio becomes less than 1 locally, depending on the length of the sliding region, the shape (curve or straight line) of the sliding region, or the slope, may occur.

In order to calculate the NP-ratio in the sliding region, it is an accurate method to calculate the NP-Ratio considering the loading amount, the thickness, the capacity of the active material, and tolerance, etc. at the position where the positive electrode faces the negative electrode for positive electrode and negative electrode which are subjects of management, but it is not easy to calculate NP-ratio in the sliding region for all products at the time of mass production.

As such, the present invention provides a new method of managing the NP-ratio by measuring the thickness of the positive electrode mixture layer and the thickness of the negative electrode mixture layer in the sliding region when at least one of the positive electrode and the negative electrode includes at least one sliding region in the region where the positive electrode faces the negative electrode.

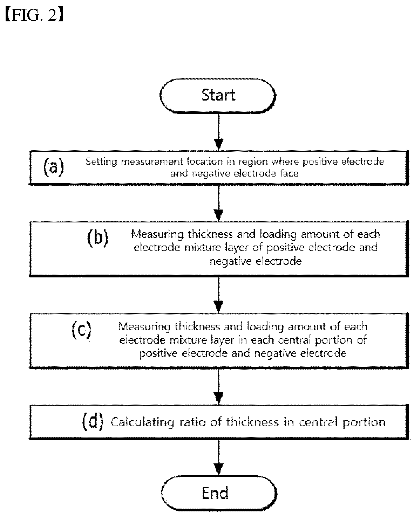

FIG. 2 is a flowchart of a method of managing a sliding region of an electrode according to one embodiment of the present invention. Referring to FIG. 2, a method of managing a sliding region of an electrode of the present invention includes: (a) a process of determining a specific region where a positive electrode and a negative electrode, which are subjects of management to be used in manufacturing an electrode assembly, face each other and setting a measurement location in the specific region; (b) a process of measuring a thickness and a loading amount of each electrode mixture layer of the positive electrode and the negative electrode at the set measurement location; (c) a process of measuring a thickness and a loading amount of an electrode mixture layer at each central portion of the positive electrode and the negative electrode; and (d) a process of calculating a ratio of the thickness of the electrode mixture layer of the positive electrode and the negative electrode measured in the process (b) to the thickness of the central portion measured in the process (c).

First, the process (a) will be described. The process (a) is a process of determining a region where a positive electrode and a negative electrode, which are subjects of management, face each other and setting measurement locations for measuring the thickness and the loading amount of each of the positive electrode mixture layer and the negative electrode mixture layer in the determined region when assembling an electrode assembly with the positive electrode and the negative electrode.

Since the object of the present invention is to locally prevent the reversal of the NP-ratio in the sliding region, the process (a) is to set the measurement location in the position where the positive electrode and the negative electrode face each other of the sliding region.

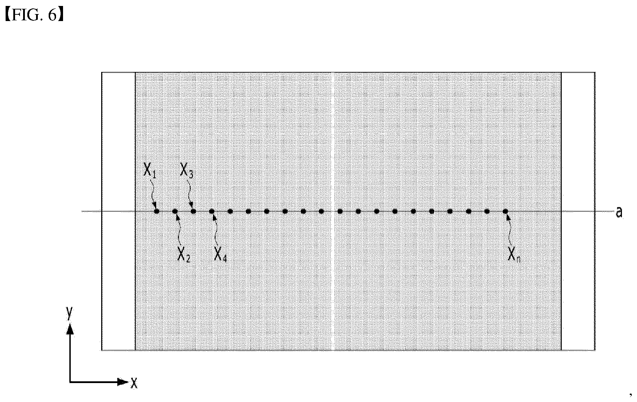

FIGS. 6 to 8 show measurement locations which are set according to various embodiments of the present invention.

First, referring to FIG. 6, the process (a) may include setting a plurality of measurement locations (X₁, X_{2...}Xₙ) at regular intervals along a width direction (x-axis) on a center line in a longitudinal direction of the electrode in the region whether the positive electrode faces the negative electrode. Further, the process (b) to be described later is performed at the set measurement locations.

At this time, the separation distance between the plurality of measurement locations may be in the range of 0.05 to 2 mm, preferably 0.07 to 1 mm, and more preferably in the range of 0.1 to 0.5 mm.

Some of the measurement locations are positioned at the sliding region, some others may be positioned at a region other than the sliding region.

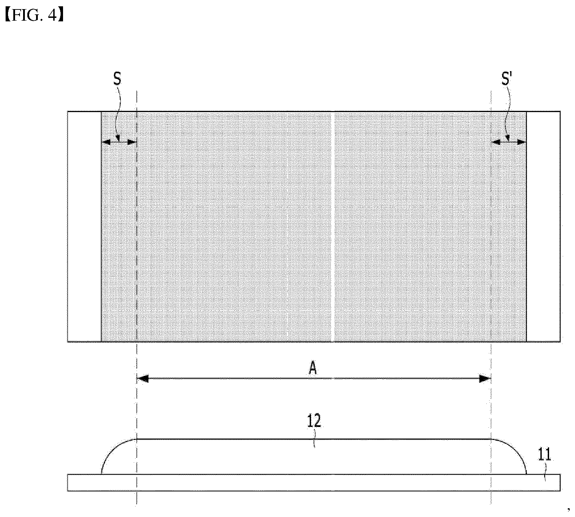

The sliding region is a region where the thickness of the electrode mixture layer decreases toward the non-coated part, and the thickness of the electrode mixture layer increases toward the coated part, and the thickness of the electrode mixture layer continuously changes according to the measurement location in the sliding region. Hence, it is preferable that the interval between measurement locations, which are set by the process (a), are relatively small in the sliding region for more accurate management. Further, as shown in FIG. 4, in the portion A other than the sliding region (S and S'), the thickness of the electrode mixture layer may be constant in the measurement locations even if the measurement locations are changed. Therefore, it is not a problem that the interval between the measurement locations is relatively large in the region (A) of the electrode mixture layer except for the sliding region (S and S'). It is preferable that the interval between measurement locations in the region other than the sliding region is greater than the interval between measurement locations in the sliding region, for quick and efficient management.

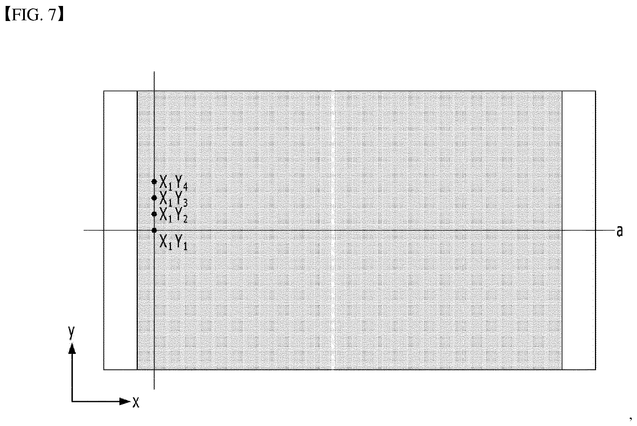

According to another embodiment of the present invention, the method may further include a process of further setting a plurality of measurement locations at regular intervals along a longitudinal direction (y axis) of the electrode, at each point of the measurement locations (X₁, X_{2...}Xₙ). Referring to FIG. 7, P1(X₁,Y₁), P2(X₂,Y₂), P3(X₃,Y₃), P4(X₄,Y₄)..., which are measurement locations at regular intervals in the y-axis direction on the basis of X₁ among the measurement locations set as described above, may be set. Only 4 points of P1(X₁,Y₁), P2(X₂,Y₂), P3(X₃,Y₃) and P4(X₄,Y₄) were illustrated in FIG. 7, but the present invention is not limited to these examples and measurement locations may be further added or reduced.

In another embodiment of the present invention, the process (a) includes: (a-1) a process of making an image for a plurality of vertical lines at regular intervals along a width direction (x-axis) of the electrode at the specific region; (a-2) a process of making an image for virtual horizontal lines extended in a width direction at regular intervals along a longitudinal direction (y-axis) in the set sliding region; (a-3) a process of setting a plurality of rectangular regions formed by intersection of the vertical lines and the horizontal lines as segmented regions; and (a-4) setting respective arbitrary points within the set segmented regions as measurement locations.

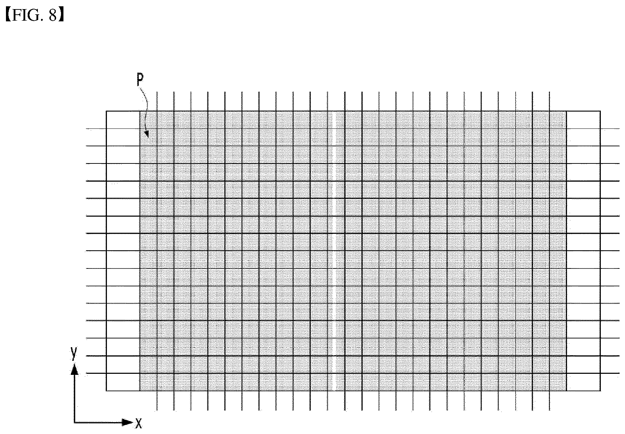

Referring to FIG. 8, the region, where the positive electrode and the negative electrode face each other, may be divided into a plurality sub-regions as a plurality of horizontal lines parallel to the width direction of the electrode and a plurality of vertical lines parallel to the longitudinal direction in the region cross each other. Further, an arbitrary point P in an arbitrary segmented region among the plurality segmented regions may be set as the measurement location.

At this time, the separation distance between the vertical lines and the separation distance between the horizontal lines may be in the range of 0.05 to 2 mm, preferably 0.07 to 1 mm, and more preferably 0.1 to 0.5 mm.

Likewise, it is possible to set a plurality of points, where the positive electrode face the negative electrode, as measurement locations, but it takes a lot of efforts and costs if there are too many measurement locations. Hence, in the process (a), it is possible to set a center point of the sliding region of the positive electrode and a point of the negative electrode mixture layer facing the center point, and a center point of the sliding region of the negative electrode and a point of the positive electrode mixture layer facing the center point, as measurement locations. Herein, the center of the sliding region refers to the point corresponding to 1/2 in the x-axis direction in the sliding region.

Specifically, point 1 corresponding to 1/2 of the sliding region of the positive electrode and a point of the negative electrode mixture layer facing the point 1 are set as the measurement location, and point 2 corresponding to 1/2 of the sliding region of the negative electrode and a point of the positive electrode mixture layer facing the point 2 are set as the measurement location.

The process (b) will be described below. The process (b) of the present invention is a process of measuring the thickness and the loading amount of each electrode mixture layer of a positive electrode and a negative electrode which are main elements for managing the NP-ratio of an electrode. The process (b) of the present invention includes measuring the thickness of the positive electrode mixture layer of the positive electrode and the loading amount of the positive electrode, and the thickness of the negative electrode mixture layer of the negative electrode and the loading amount of the negative electrode in measurement locations which are set in the process (a).

Further, the positive electrode, which is the subject of measurement, is an electrode which is obtained by applying a positive electrode slurry containing a positive electrode active material on a positive electrode current collector and then drying the slurry, and the negative electrode is an electrode which is obtained by applying a negative electrode slurry containing a negative electrode active material on a negative electrode current collector and then drying the slurry. Since the electrode active material layer is in a fluid state right after coating an electrode slurry on a current collector, it is difficult to measure the thickness by using a thickness measuring instrument. Hence, the thickness is measured after drying the electrode active material layer to some extent.

Further, the positive electrode and the negative electrode may be an electrode before or after the rolling process. However, if the thickness of the electrode mixture layer is measured for the electrode having gone through the rolling process, the electrode mixture layer including the sliding region is entirely pressed during the rolling process, and accordingly the thickness deviation on the sliding region may not be large. As such, it may be preferable to use a thickness measuring instrument capable of measuring the thickness in micrometer units.

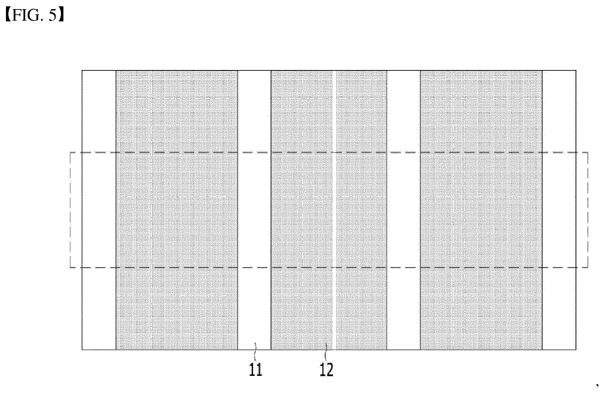

In an embodiment of the present invention, the process (b) may include measuring a thickness of the electrode mixture layer by using rotary calipers. Referring to FIG. 5, after cutting the positive electrode or/and the negative electrode which are subjects of management as shown in FIG. 5, the cut sheet may be put in rotary calipers to then measure the thickness of the electrode mixture layer at the set measurement locations and the thickness of the electrode mixture layer in the central portion to be described later.

Further, in an embodiment of the present invention, the process (b) may include measuring the loading amount of the electrode mixture layer by using a web gauge.

Further, in an embodiment of the present invention, the process (b) may include calculating the loading amount of the electrode mixture layer by using an electrode loading design value.

The process (c) will be described below. The process (c) is a process of measuring a thickness of an electrode mixture layer at each central portion of the positive electrode and the negative electrode which are subjects of management. This is the process required to calculate the ratio of the thicknesses of the process (d). At this time, the thickness of the electrode mixture layer may be measured by using rotary calipers as in the process (b).

Herein, each central portion of the positive electrode and the negative electrode means a portion which is not a sliding region and where the thickness of the electrode mixture layer is constant. When coating the electrode slurry, the sliding region is shown in both ends in the width direction due to the fluid characteristic of the slurry, and the thickness of the coated part except for the sliding region is constant. Hence, since the thickness of the electrode mixture layer in the center in the width direction of the electrode is the same as the thickness of the electrode positioned close to the coated part of the sliding region, the process of measuring the thickness of the electrode at each central portion of the positive electrode and the negative electrode may be a process of measuring the thickness of the electrode mixture layer close to the coated part of the sliding region, which is not the sliding region.

Herein, the thickness of the electrode mixture layer in the central portion means the thickness of the electrode mixture layer at a location which does not belong to the sliding region, and may specifically be a thickness at a point spaced apart from the boundary between the non-coated part and the coated part by 5 to 15 mm, 15 to 20 mm, 10 to 30 mm, or 20 to 30 mm.

This is because the sliding region of the electrode may have a length of 5 to 15 mm, 15 to 20 mm, 10 to 30 mm, or 20 to 30 mm from the boundary between the coated part and the non-coated part toward the coated part, and the thickness of the electrode mixture layer except for the sliding region is almost constant.

Hence, the process (c) may be a process of measuring the thickness of the electrode mixture layer at a point placed away from the boundary between the coated part and the non-coated part by 5 to 15 mm, 15 to 20 mm, 10 to 30 mm, or 20 to 30 mm.

The process (d) will be described below. The process (d) is a process of calculating a ratio of the thickness of the electrode mixture layer of the positive electrode and the negative electrode measured in the process (b) to the thickness of the central portion measured in the process (c). The NP-ratio at a local location can be managed using the ratio (T_{(P-n)}/ T_{(P-center)}) of the thickness T_{(P-n)} of the positive electrode mixture layer measured at the set location to the thickness T_{(P-center)} at the central portion of the positive electrode mixture layer measured by the above-described process (c), and the ratio (T_{(N-center)}/ T_{(N-n)}) of the thickness T_{(N-n)} of the positive electrode mixture layer measured at the set location to the thickness T_{(N-center)} of the central portion of the negative electrode mixture layer measured by the process (c).

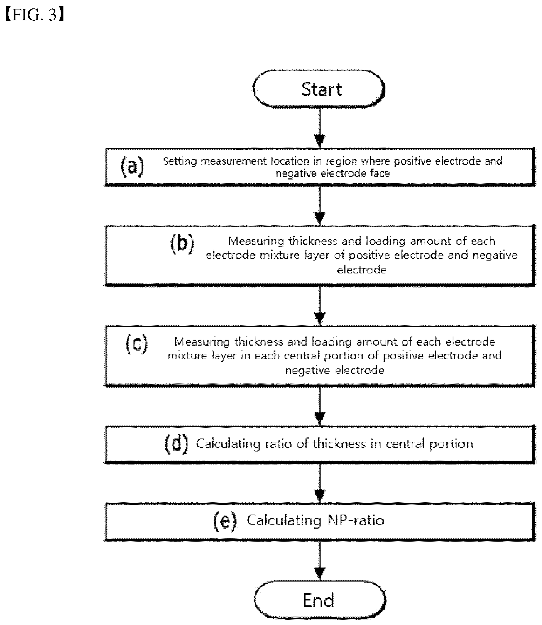

FIG. 3 is a flowchart of a method of managing a sliding region of an electrode according to another embodiment of the present invention. Referring to FIG. 3, the method of managing a sliding region of an electrode of the present invention further includes (e) a process of calculating a ratio (NP-ratio) of a capacity per unit area of the negative electrode to a capacity per unit area of the positive electrode at the measurement location where the positive electrode faces the negative electrode. The process (e) includes using big data in order to calculate the NP-ratio using factors of the loading amount and the ratio of thicknesses by measurement locations calculated through the above-described processes (a) to (d) for a positive electrode and a negative electrode which are subjects of management.

In one specific example, the process (e) includes: (e-1) a process of accumulating correlation data of a loading amount of the positive electrode and the negative electrode, a ratio of thickness of each of the positive electrode and the negative electrode, and the NP-ratio, by repeating the above-described processes (a) to (d) while changing the measurement location for the positive electrode and the negative electrode for a specimen; (e-2) a process of deriving a correlation equation by analyzing the accumulated data; and (e-3) a process of calculating the NP-ratio by substituting the loading amount measured in the process (b) and the ratio of the thickness calculated in the process (d) into the correlation equation for the positive electrode and the negative electrode which are subjects of management.

First, in the process (e-1), positive electrodes and negative electrodes, which have the same size as that of the positive electrode and the negative electrode as subjects of management, are prepared as specimens, and processes (a) to (d) are repeated for these specimens, and the loading amount and the thickness ratio for each measurement location of each of the positive electrode and the negative electrode are calculated and stored. Further, data about NP-ratios, which are calculated for each measurement location based on the obtained information on the loading amount and the thickness ratio according to a known method, are accumulated. The NP-ratio may be calculated in 4 kinds of schemes of 1) positive electrode charge amount and negative electrode discharge amount, 2) positive electrode charge amount and negative electrode charge amount, 3) positive electrode discharge amount and negative electrode discharge amount, and 4) positive electrode discharge amount and negative electrode charge amount.

Further, the process (b-2) includes deriving a correlation function between a ratio of each loading amount of the positive electrode and the negative electrode to each thickness of the positive electrode and the negative electrode, and the NP-ratio. At this time data may be analyzed using a r method, but the present invention is not limited to this example.

The process (e-3) includes calculating the NP-ratio by substituting the loading amount and the ratio of the thicknesses of each of the positive electrode and the negative electrode which are subjects of management into the correlation equation derived in the process (e-2). As such, according to the present invention, it is possible to easily recognize whether there has been a reversal phenomenon of the NP-ratio in a region including a sliding region which is difficult to be managed as it becomes possible to calculate the NP-ratio by measuring the loading amount and the thickness ratio for each location of the positive electrode and the negative electrode which are subjects of management.

Further, it is possible to derive the maximum thickness of the positive electrode in the sliding region and the minimum thickness of the negative electrode in the sliding region by substituting the reference value of the designed SP-ratio into a correlation function of the NP ratio, a loading amount of each of the positive electrode and the negative electrode and the ratio of the thickness of each of the positive electrode and the negative electrode which are derived by the process (b-2). Further, the reversal of the NP-ratio can be prevented by allowing the thickness of the positive electrode mixture layer to be equal to or less than the maximum thickness and the thickness of the negative electrode mixture layer to be equal to or greater than the minimum thickness, in a sliding region.

## Claims

1. A method of managing a sliding region (S) of an electrode, the method comprising:
(a) a process of determining a specific region where a positive electrode (10) and a negative electrode (20), which are subjects of management to be used in manufacturing an electrode assembly, face each other and setting a measurement location in the specific region, wherein (a) includes setting a plurality of measurement locations (X₁, X_{2...}Xₙ) at regular intervals along a width direction (x-axis) on a center line in a longitudinal direction of the electrode;
(b) a process of measuring a thickness and a loading amount of an electrode mixture layer (12, 22) of each of the positive electrode (10) and the negative electrode (20) at the set measurement location;
(c) a process of measuring a thickness and a loading amount of an electrode mixture layer (12, 22) at a central portion of each of the positive electrode (10) and the negative electrode (20); wherein the central portion of each of the positive electrode (10) and the negative electrode (20) is a portion which is not the sliding region (S) and where the thickness of the electrode mixture layer (12,22) is constant and
(d) a process of calculating a ratio of the thickness of the electrode mixture layer (12,22) of the positive electrode (10) and the negative electrode (20) measured in the process (b) to the thickness of the central portion measured in the process (c).

2. The method of claim 1, further comprising:
(e) a process of calculating a ratio (NP-ratio) of a capacity per unit area of the negative electrode (20) to a capacity per unit area of the positive electrode (10) at the measurement location.

3. The method of claim 2, wherein the process (e) comprises:
(e-1) a process of accumulating correlation data of a loading amount of each of the positive electrode (10) and the negative electrode (20), a ratio of thickness of each of the positive electrode (10) and the negative electrode (20), and the NP-ratio, by repeating the processes of claim 1 while changing the measurement location for the positive electrode (10) and the negative electrode (20) for a specimen;
(e-2) a process of deriving a correlation equation by analyzing the accumulated data;
(e-3) a process of calculating the NP-ratio by substituting the loading amount measured in the process (b) and the ratio of the thickness calculated in the process (d) into the correlation equation for the positive electrode (10) and the negative electrode (20) which are subjects of management.

4. The method of claim 1, wherein the process (a) includes setting the measurement location at which the positive electrode (10) faces the negative electrode in the sliding region (20).

5. The method of claim 1, further comprising a process of further setting a plurality of measurement locations at regular intervals along a longitudinal direction (y axis) of the electrode, at each point of the plurality of measurement locations (X₁, X_{2...}Xₙ).

6. The method of claim 1, wherein the process (a) comprises:
(a-1) a process of making an image for a plurality of vertical lines at regular intervals along a width direction (x-axis) of the electrode at the specific region;
(a-2) a process of making an image for a plurality of horizontal lines at regular intervals along a longitudinal direction (y-axis) in the set sliding region;
(a-3) a process of setting a plurality of rectangular regions formed by intersection of the plurality of vertical lines and the plurality of horizontal lines as segmented regions; and
(a-4) setting respective arbitrary points within the set segmented regions as measurement locations.

7. The method of claim 1, wherein the plurality of measurement locations (X₁, X_{2...}Xₙ) are spaced apart from each other at an interval of 0.05 to 0.2 mm.

8. The method of claim 1, wherein the process (b) and the process (c) include measuring a thickness of the electrode mixture layer (12,22) by using a rotary caliper.

9. The method of claim 1, wherein the process (b) includes measuring the loading amount of the electrode mixture layer (12,22) by using a web gauge.

10. The method of claim 1, wherein the positive electrode (10) and the negative electrode (20) of the process (b) are an electrode which is obtained by applying an electrode slurry containing an electrode active material on a current collector and then drying the electrode slurry.

11. The method of claim 10, wherein the positive electrode (10) and the negative electrode (20) of the process (b) is an electrode before going through a rolling process.

## Patentansprüche

1. Verfahren zur Verwaltung eines Gleitbereichs (S) einer Elektrode, das Verfahren umfassend:
(a) einen Prozess eines Bestimmens eines spezifischen Bereichs, in welchem eine positive Elektrode (10) und eine negative Elektrode (20), welche Gegenstand einer Verwaltung zur Verwendung bei einer Herstellung einer Elektrodenanordnung sind, einander gegenüberliegen, und zum Festlegen eines Messortes in dem spezifischen Bereich,
wobei (a) ein Festlegen einer Mehrzahl von Messorten (*X*₁, *X*₂,*...*, *Xₙ*) in regelmäßigen Abständen entlang einer Breitenrichtung (x-Achse) an einer Mittellinie in einer longitudinalen Richtung der Elektrode umfasst;
(b) einen Prozess eines Messens einer Dicke und einer Beladungsmenge einer Elektrodenmischschicht (12, 22) jeder aus der positiven Elektrode (10) und der negativen Elektrode (20) an dem festgelegten Messort;
(c) einen Prozess eines Messens einer Dicke und einer Beladungsmenge einer Elektrodenmischschicht (12, 22) an einem zentralen Abschnitt jeder aus der positiven Elektrode (10) und der negativen Elektrode (20); wobei der zentrale Abschnitt jeder aus der positiven Elektrode (10) und der negativen Elektrode (20) ein Abschnitt ist, welcher nicht der Gleitbereich (S) ist und in welchem die Dicke der Elektrodenmischschicht (12, 22) konstant ist; und
(d) einen Prozess eines Berechnens eines Verhältnisses der Dicke der Elektrodenmischschicht (12, 22) der positiven Elektrode (10) und der negativen Elektrode (20), gemessen in dem Prozess (b), zu der Dicke des zentralen Abschnitts, gemessen in dem Prozess (c).

2. Verfahren nach Anspruch 1, ferner umfassend:
(e) einen Prozess eines Berechnens eines Verhältnisses (NP-Verhältnis) einer Kapazität pro Flächeneinheit der negativen Elektrode (20) zu einer Kapazität pro Flächeneinheit der positiven Elektrode (10) an dem Messort.

3. Verfahren nach Anspruch 2, wobei der Prozess (e) umfasst:
(e-1) einen Prozess eines Ansammelns von Korrelationsdaten einer Beladungsmenge jedes aus der positiven Elektrode (10) und der negativen Elektrode (20), eines Dickenverhältnisses jedes aus der positiven Elektrode (10) und der negativen Elektrode (20), und des NP-Verhältnisses, durch Wiederholen der Prozesse nach Anspruch 1, während der Messort für die positive Elektrode (10) und die negative Elektrode (20) für eine Probe verändert wird;
(e-2) einen Prozess eines Ableitens einer Korrelationsgleichung durch Analysieren der angesammelten Daten;
(e-3) einen Prozess eines Berechnens des NP-Verhältnisses durch Einsetzen der Beladungsmenge, welche in dem Prozess (b) gemessen worden ist und des Dickenverhältnisses, welches in dem Prozess (d) berechnet worden ist, in die Korrelationsgleichung für die positive Elektrode (10) und die negative Elektrode (20), welche Gegenstand der Verwaltung sind.

4. Verfahren nach Anspruch 1, wobei der Prozess (a) ein Festlegen des Messortes umfasst, an welchem die positive Elektrode (10) der negativen Elektrode in dem Gleitbereich (20) entgegengesetzt ist.

5. Verfahren nach Anspruch 1, ferner umfassend einen Prozess zum weiteren Festlegen einer Mehrzahl von Messorten in regelmäßigen Abständen entlang einer longitudinalen Richtung (y-Achse) der Elektrode, an jedem Punkt der Mehrzahl von Messorten (*X*₁, *X*₂,*...*, *Xₙ*).

6. Verfahren nach Anspruch 1, wobei der Prozess (a) umfasst:
(a-1) einen Prozess eines Erzeugens eines Bildes für eine Mehrzahl vertikaler Linien in regelmäßigen Abständen entlang einer Breitenrichtung (x-Achse) der Elektrode in dem spezifischen Bereich;
(a-2) einen Prozess eines Erzeugens eines Bildes für eine Mehrzahl horizontaler Linien in regelmäßigen Abständen entlang einer longitudinalen Richtung (y-Achse) in dem festgelegten Gleitbereich;
(a-3) einen Prozess eines Festlegens einer Mehrzahl rechteckiger Bereiche, welche durch Schnittpunkte der Mehrzahl vertikaler Linien und der Mehrzahl horizontaler Linien als segmentierte Bereiche gebildet sind; und
(a-4) Festlegen jeweiliger beliebiger Punkte innerhalb der festgelegten segmentierten Bereiche als Messorte.

7. Verfahren nach Anspruch 1, wobei die Mehrzahl von Messorten (*X*₁, *X*₂,*..., Xₙ*) voneinander mit einem Abstand von 0,05 bis 0,2 mm beabstandet sind.

8. Verfahren nach Anspruch 1, wobei der Prozess (b) und der Prozess (c) ein Messen einer Dicke der Elektrodenmischschicht (12, 22) unter Verwendung eines rotierenden Messchiebers umfassen.

9. Verfahren nach Anspruch 1, wobei der Prozess (b) ein Messen der Beladungsmenge der Elektrodenmischschicht (12, 22) unter Verwendung eines Web-Messgeräts umfasst.

10. Verfahren nach Anspruch 1, wobei die positive Elektrode (10) und die negative Elektrode (20) des Prozesses (b) eine Elektrode sind, welche erhalten wird, indem eine Elektrodenpaste, welche ein Elektrodenaktivmaterial enthält, an einen Stromabnehmer aufgebracht wird und dann die Elektrodenpaste getrocknet wird.

11. Verfahren nach Anspruch 10, wobei die positive Elektrode (10) und die negative Elektrode (20) des Prozesses (b) eine Elektrode sind, bevor sie einen Walzprozess durchlaufen.

## Revendications

1. Procédé de gestion d'une région de glissement (S) d'une électrode, le procédé comprenant :
(a) un processus de détermination d'une région spécifique où une électrode positive (10) et une électrode négative (20), qui sont des sujets de gestion à utiliser dans la fabrication d'un ensemble d'électrodes, se font face et de définition d'un emplacement de mesure dans la région spécifique, dans lequel (a) comporte la définition d'une pluralité d'emplacements de mesure (X₁, X₂... Xₙ) à intervalles réguliers le long d'une direction de largeur (axe x) sur une ligne centrale dans une direction longitudinale de l'électrode ;
(b) un processus de mesure d'une épaisseur et d'une quantité de chargement d'une couche de mélange d'électrodes (12, 22) de chacune de l'électrode positive (10) et de l'électrode négative (20) au niveau de l'emplacement de mesure défini ;
(c) un processus de mesure d'une épaisseur et d'une quantité de chargement d'une couche de mélange d'électrodes (12, 22) au niveau d'une partie centrale de chacune de l'électrode positive (10) et de l'électrode négative (20) ; dans lequel la partie centrale de chacune de l'électrode positive (10) et de l'électrode négative (20) est une partie qui n'est pas la région de glissement (S) et où l'épaisseur de la couche de mélange d'électrodes (12, 22) est constante et
(d) un processus de calcul d'un rapport de l'épaisseur de la couche de mélange d'électrodes (12, 22) de l'électrode positive (10) et de l'électrode négative (20) mesurée dans le processus (b) à l'épaisseur de la partie centrale mesurée dans le processus (c).

2. Procédé selon la revendication 1, comprenant en outre :
(e) un processus de calcul d'un rapport (rapport NP) d'une capacité par unité de surface de l'électrode négative (20) à une capacité par unité de surface de l'électrode positive (10) au niveau de l'emplacement de mesure.

3. Procédé selon la revendication 2, dans lequel le processus (e) comprend :
(e-1) un processus d'accumulation de données de corrélation d'une quantité de chargement de chacune de l'électrode positive (10) et de l'électrode négative (20), d'un rapport d'épaisseur de chacune de l'électrode positive (10) et de l'électrode négative (20), et du rapport NP, en répétant les processus de la revendication 1 tout en changeant l'emplacement de mesure pour l'électrode positive (10) et l'électrode négative (20) pour un échantillon ;
(e-2) un processus de dérivation d'une équation de corrélation en analysant les données accumulées ;
(e-3) un processus de calcul du rapport NP en substituant la quantité de chargement mesurée dans le processus (b) et le rapport de l'épaisseur calculée dans le processus (d) dans l'équation de corrélation pour l'électrode positive (10) et l'électrode négative (20) qui sont des sujets de gestion.

4. Procédé selon la revendication 1, dans lequel le processus (a) comporte la définition de l'emplacement de mesure au niveau duquel l'électrode positive (10) fait face à l'électrode négative dans la région de glissement (20).

5. Procédé selon la revendication 1, comprenant en outre un processus de définition supplémentaire d'une pluralité d'emplacements de mesure à intervalles réguliers le long d'une direction longitudinale (axe y) de l'électrode, au niveau de chaque point de la pluralité d'emplacements de mesure (X₁, X₂... Xₙ).

6. Procédé selon la revendication 1, dans lequel le processus (a) comprend :
(a-1) un processus de réalisation d'une image pour une pluralité de lignes verticales à intervalles réguliers le long d'une direction de largeur (axe x) de l'électrode au niveau de la région spécifique ;
(a-2) un processus de réalisation d'une image pour une pluralité de lignes horizontales à intervalles réguliers le long d'une direction longitudinale (axe y) dans la région de glissement définie ;
(a-3) un processus de définition d'une pluralité de régions rectangulaires formées par intersection de la pluralité de lignes verticales et de la pluralité de lignes horizontales en tant que régions segmentées ; et
(a-4) la définition de points arbitraires respectifs au sein des régions segmentées définies comme emplacements de mesure.

7. Procédé selon la revendication 1, dans lequel la pluralité d'emplacements de mesure (X₁, X₂...Xₙ) sont espacés les uns des autres d'un intervalle de 0,05 à 0,2 mm.

8. Procédé selon la revendication 1, dans lequel le processus (b) et le processus (c) comportent la mesure d'une épaisseur de la couche de mélange d'électrodes (12, 22) en utilisant un pied à coulisse rotatif.

9. Procédé selon la revendication 1, dans lequel le processus (b) comporte la mesure de la quantité de chargement de la couche de mélange d'électrodes (12, 22) en utilisant une jauge à bande.

10. Procédé selon la revendication 1, dans lequel l'électrode positive (10) et l'électrode négative (20) du processus (b) sont une électrode qui est obtenue en appliquant une suspension d'électrode contenant un matériau actif d'électrode sur un collecteur de courant, puis en séchant la suspension d'électrode.

11. Procédé selon la revendication 10, dans lequel l'électrode positive (10) et l'électrode négative (20) du processus (b) est une électrode avant de passer par un processus de laminage.
